# EUROPEAN PATENT SPECIFICATION

(11) **EP 1 181 131 B1**
(45) Date of publication and mention of the grant of the patent: **09.07.2003**
(21) Application number: 99926747.9
(22) Date of filing: 15.06.1999
(51) Int. Cl.: B23Q 16/00

(54) **SELF-CENTERING REAR GUIDING DEVICE FOR MACHINING BARS MOUNTED ON LATHES**
SELBSTZENTRIERENDE FÜHRUNGSVORRICHTUNG ZUR BEARBEITUNG VON STÄBEN AUF EINER DREHMASCHINE
DISPOSITIF DE GUIDAGE ARRIERE AUTOCENTREUR POUR USINER DES BARRES MONTEES SUR DES TOURS

(30) Priority: 03.06.1999 IT MI991249
(43) Date of publication of application: 27.02.2002
(73) Proprietor: F.LLI Pirillo SNC, 28062 Cameri (IT)
(72) Inventor: PIRILLO, Vincenzo, I-28062 Cameri (IT)
(74) Representative: Mocchetti, Ilio G.
(86) International application number: IT9900172
(87) International publication number: WO00074894

(56) References cited:
- WO-A-94/16846
- DE-A- 2 525 103
- DE-U- 9 216 909

## Description

The invention concerns a rear guiding device for bars to be machined in lathes, according to the preamble of claim 1.

The essential parts of a lathe are known to consist of a bed, a drive head placed at one end of the bed, a self-centering platform or spindle fixed at the external forward end of a tube inside the drive head and operated by an electric motor, a rotating tailstock at the other end of the bed, a tool saddle sliding on longitudinal rails moved along by a lead screw.

The piece to be machined is fixed onto the spindle, its free end, if very long, being guided by the tailstock.

It is also known that the rear end of a piece mounted on the spindle, inside the tube, is practically free.

Said rear end, especially if very long, obviously tends to sway due to vibrations or to the materials in it not being homogeneous or to their composition and dimensions lacking symmetry.

This swaying movement tends to loosen the piece on the spindle, or causes it to make irregular movements that adversely affect results of the machining process.

These problems increase in importance with the precision required.

Document DE-U-92 16 90 describes a device with a rear guide head of a bar being machined in a lathe, that can be inserted and locked inside the tube moved by the drive head, this being caused by two locking structures which, pushed one against the other by a threaded rod, determine, by means of an intermediate locking bush, centrifugal movement of two groups of radial coplanar pistons.

The two groups of pistons are placed at a short distance which progressively lessens, as the locking force increases, substantially to the position of the rear of said device and therefore at a considerable distance from the guide head of the bar being machined.

Document WO-A- 94/16846, corresponding to the preamble of claim 1, presents a guide head for a bar being machined in a lathe, there being a single group of coplanar radial pistons.

It will thus be clear that, because the action of these devices is substantially limited to one part of the tube, they cannot ensure elimination of oscillations and vibrations in the rear end of a bar being machined and cannot therefore solve the problems mentioned even though their structures are complex, difficult to manoevre and costly.

The above invention solves them as will now be explained.

Subject of the invention is a rear guide device for bars being machined on lathes in general.

This device is formed of a cylindrical structure whose external diameter corresponds to the internal diameter of the tubes generally used on drive heads of lathes for rotating the spindle, comprising
- internal means of stabilization, adjustable by the user, to keep it fixed to said tube,
- forward means for self-centering and locking the rear end of a bar being machined, inside the tube, to prevent oscillations and loosening due to vibrations, to non-homogeneous materials and to any other cause.
The means of stabilization consist of two or more sets of small pistons freely sliding inside radial holes passing through and around the longitudinal axis of the cylindrical structure and operated by a manual means of control, axial to the structure, worked from the free end of the tube.

Said means consists of a control rod comprising, in sequence along its axis, two or more truncated cone-shaped bodies facing the same way at a reciprocal distance substantially corresponding to the reciprocal distance betwen one set of pistons and another.

By moving the control rod so as to bring the positions of all these pistons to correspond with the smaller diameter of its truncated cone-shaped bodies, said pistons, pressed by compression springs, can remain inside the external surface of the cylindrical structure.

On moving the control rod so that the positions of all the pistons corresponds to those of the larger diameters of said bodies, and overcoming resistance from said compression springs, , the tops of the pistons gradually emerge and pressure is gradually increased against the internal surface of the tube until the device is held firmly against the tube.

The forward self-centering means for the rear end of the bar being machined, is a front head of the cylindrical structure that presents a tapered body so shaped as substantially to correspond with the rear end of said bar.

Following the thrust, in a relative sense, from the rear end of the bar being machined, against said head, the tapered body therefore selfcentres the free end of said bar towards the shaped body where said end finds a stable position.

The pistons' compression springs are placed inside a longitudinal slot-shaped cavity in said pistons, between the bottom of said cavity and a crosswise pin, with threaded head, inserted through a hole in the cylindrical structure and firmly screwed in.

One external face of the pistons corresponds with the internal circular surface of the tube and one internal face corresponds substantially to the larger radius of the truncated cone-shaped parts on the control rod.

The external end of the control rod is threaded to screw onto a rear flange on the cylindrical structure facing towards the free end of the tube, that same end having a cylindrical tip for application of a manual means of control for the user.

Said control rod therefore is moved axially by rotating it one way or the other using said manual means of control to do so.

The manual means of control is, in practice, a key consisting of a tubular body at one end of which is a suitable handgrip that remains outside the tube, while at the other end is a threaded tubular appendix that screws into a threaded seat in a tubular body so forming a cylindrical chamber.

Inside said cylindrical chamber is a compression spring that creates pressure between one end of said chamber and a ring that surrounds a small piston free to move inside a groove that connects said chamber with a cylindrical cavity open towards the free end of said tubular body, of a diameter corresponding to the end of the control rod emerging from the cylindrical structure.

In the walls of said cavity are two longitudinal opposing recesses into which the ends of a pin can penetrate, said pin being laid crosswise to said end of the control rod after it has moved the pin inwards overcoming resistance from the compression spring.

By holding the handgrip and turning the key, said ends of the crosswise pin can be made to penetrate inside the two longitudinal recesses and therefore inside the niches made in one of their edges, the spring, pressing on the piston, ensuring stability of the key on the control rod for as long as needed to allow it to rotate sufficiently to hold the cylindrical structure inside the tube at the start of a fresh machining process or to release said structure when machining is finished.

The forward means prepared for self-centering the rear end of the bar being machined consist of a guide head in the centre of which is a conical cavity with its larger base outwards, a bottom corresponding to the shape and size of the bar on the machine and a cylindrical bottom or a square or semi-spherical section.

If the bar being machined is tubular, the forward self-centering means for the rear end of said bar presents an axial cylindrical body fixed to the front head of the cylindrical head and a truncated cone-shaped tip, the lesser base facing outward.

The diameters of the cylindrical body correspond to the internal diameter of a tubular bar being machined.

There are advantageously two sets of pistons each consisting of three small pistons laid radially at an equal angular distance.

The centre distance between said sets of pistons corresponds to the mean centre distance of a pair of truncated-cone shaped bodies placed on the control rod.

In one type of execution the cylindrical structure consists of a cylindrical body with an axial cylindrical hole to house the control rod, of a rear flange with central threading to screw onto the thread at the end of the control rod, of a forward flange with a cylindrical expansion on the internal face of a diameter corresponding to that of the axial cylindrical hole in the cylindrical structure with an internal cylindrical hole of a diameter corresponding to the forward tip of the control rod and with a threaded cylindrical cavity in the external face to be screwed onto a threaded expansion on the guide head for the bar being machined.

The invention offers evident advantages.

By means of the above invention, the free end of the bar, inside the tube, though entirely free to rotate at all the normally used speeds, is guided and kept fully under control by the device described.

Application is exremely simple. Having chosen the forward guiding head, that will make contact with the free end of the bar being machined, natrually allowing for the shape and characteristics of said bar, all that has to be done is insert the device in the tube.

Fixing said device inside the tube is quick and easy, it being only necessary to insert the key and rotate it in the direction corresponding to expansion of the locking pistons, after which the device is practically fixed to the tube.

The low cost, extreme compactness and undoubtedly easy use make universal application possible in the field covered by the invention.

Characteristics and purposes of the disclosure will be made still clearer by the following examples of its execution illustrated by diagrammatically drawn figures.

Fig. 1 Perspective view of a known parallel lathe cut through at the tube of the drive head, with detail to show application of the rear guide device for the bar being machined, subject of the invention.

Fig. 2 The device cut through longitudinally.

Fig. 3 Cross section of the device when idle at the position of one of the pairs of triads of three small radial pistons for locking the device inside the tube, in the position of retraction.

Fig. 4 As above, with pistons in the expanded, and therefore locking, position.

Fig. 5 Enlarged detail of a piston, side view.

Fig. 6 As above, side view partly cut away.

Fig. 7 As above, plan view.

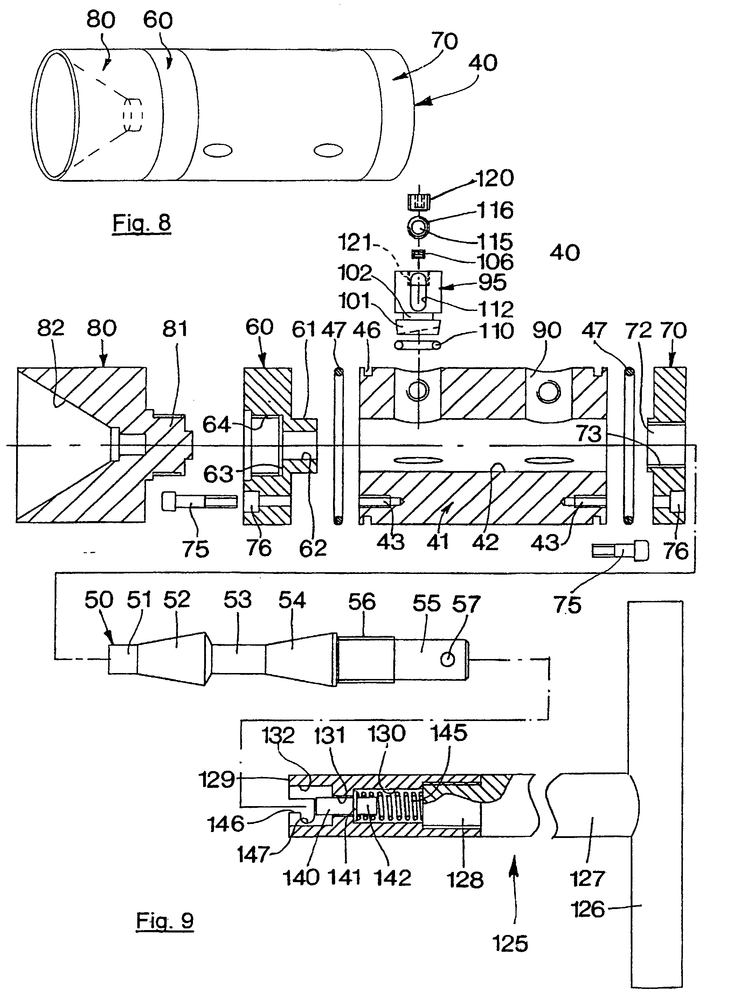

Fig. 8 Perspective view of the device when idle.

Fig. 9 Exploded view of a longitudinal section of the device.

Fig. 10 The device when being mounted on the spindle tube, a longitudinal section.

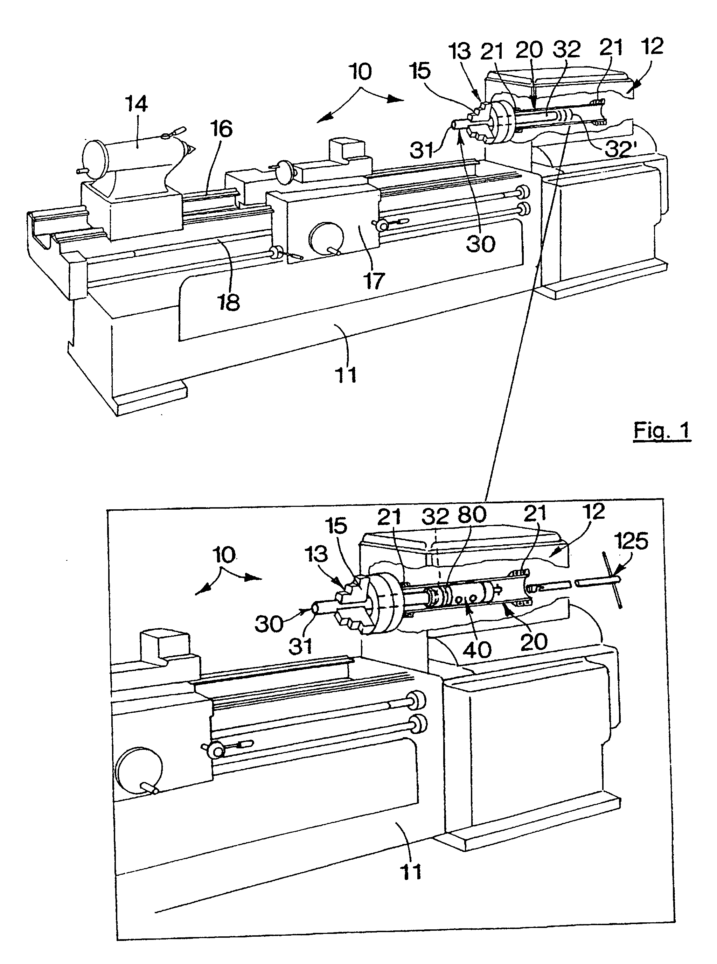

Fig.1 1 As above, on completion of mounting.

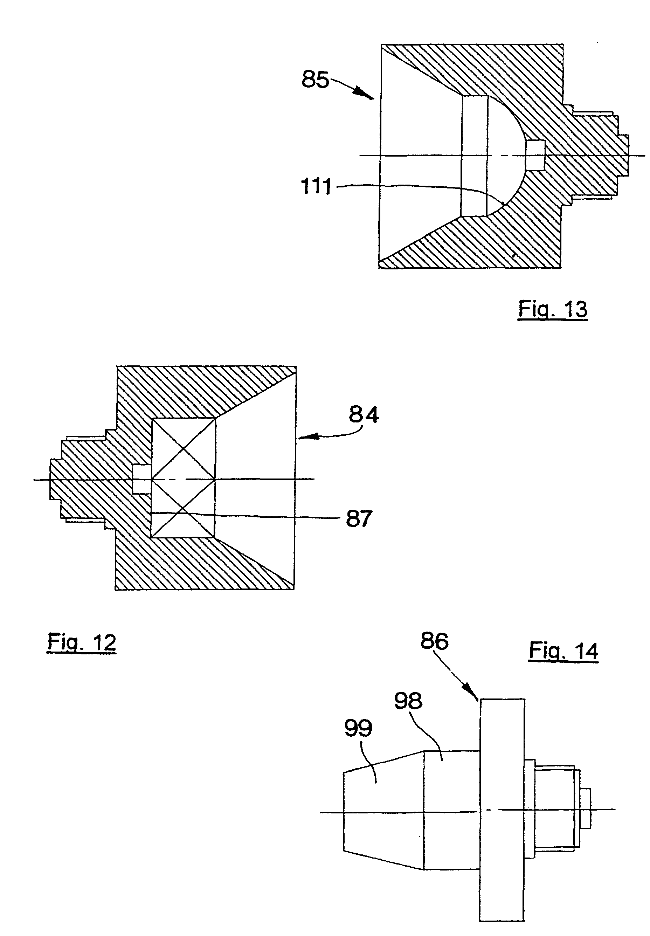

Fig.12 The guide head of the device, adapted to machine a square section bar.

Fig.13 The guide head of the device adapted to machine a bar with ball-shaped or in any case a rounded end.

Fig. 14 The guide head of the device for machining a tubular bar.

Figure 1 shows an ordinary lathe 10 cut through at the position of the tube 20 of the drive head 12 inside which the device 40, subject of the invention, can be mounted.

The essential parts of the lathe are shown, the bed 11, the rotating tailstock 14 fixed to the longitudinal guides 16, the saddle 17 for tools sliding on longitudinal rails drawn along by the lead screw 18.

The tube 20 is supported by ball bearings 21 and is rotated, through. a gear box, by an electric motor not shown.

The spindle 13 is mounted on the forward end of the tube that emerges at the front from the body of the drive head 12.

The spindle jaws 15 lock and self-centre the bar 30 to be machined. As seen in Figure 1, the rear end 32 of the bar 30 is practically free projecting inside the tube 20.

Especially if the bar is long, therefore, it can sway as indicated by the symbols 32'.

The enlarged detail of Figure 1 shows how the rear guide device 40, subject of the invention, is applied inside the tube 20, for the bar to be machined.

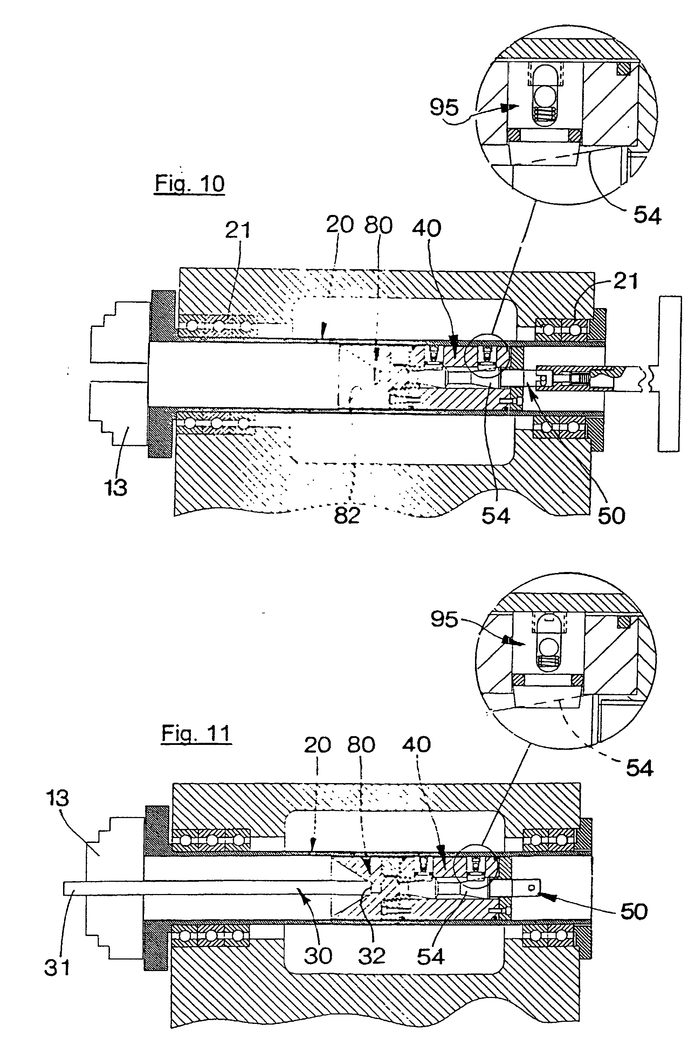

It will be seen how the free end 32, inside the tube, of the bar 30 is inserted (see also Fig. 11) into the guide head 80 of said device 40.

Said device 40 presents a cylindrical body 41 with an axial cylindrical hole 42 to receive the control rod 50 comprising, in sequence, a cylindrical head 51, a truncated-cone shaped body, a cylindrical length 53, a second truncated-cone shaped body 54 and a cylindrical end 55 with threaded base 56.

Through said end 55 a pin 57 passes, its purpose being to permit application of an assembly key 125 for mounting the device 40 inside the tube 20, as will be explained below.

The maximum diameter of said truncated-cone shaped bodies 52, 54 is practically identical and corresponds to that of the internal diameter of the axial cylindrical hole 42 in the cylindrical body 41 of the device 40.

After inserting the rod 50, said body 41 is closed at its ends by the respective front 60 and rear 70 flanges, fixed by screws 75 that, passing through the holes 76 in the flanges, screw into the threaded holes 43 on the faces matching with said body 41.

On its inner face the flange 60 presents a cylindrical expansion 61 with an axal cylindrical hole 62.

The external diameter of said expansion 61 corresponds to the internal diameter of the cylindrical hole 42 in the body 41.

A hole 63 with threading 64 is made in the external face of said flange 60.

In the flange 70 is an axial hole 72 with threading 73.

Close to the ends of the cylindrical body 41 are annular grooves 46 to receive packing 47.

On mounting the flange 70, the threaded part 56 of the control rod 50 is screwed into the threaded 73 hole 72 in the flange 70 while, with adequate play, its front head 51 penetrates inside the hole 62 in the flange 60.

Said flange 60 carries the rear guide head 80 for a bar to be machined, and comprises a substantially cylindrical body whose external diameter corresponds to that of the base 41 common to both flanges 60 and 70.

Internally said guide head 80 presents an expansion 81 threaded to screw into the thread 64 in the axial hole 63 in said flange 60.

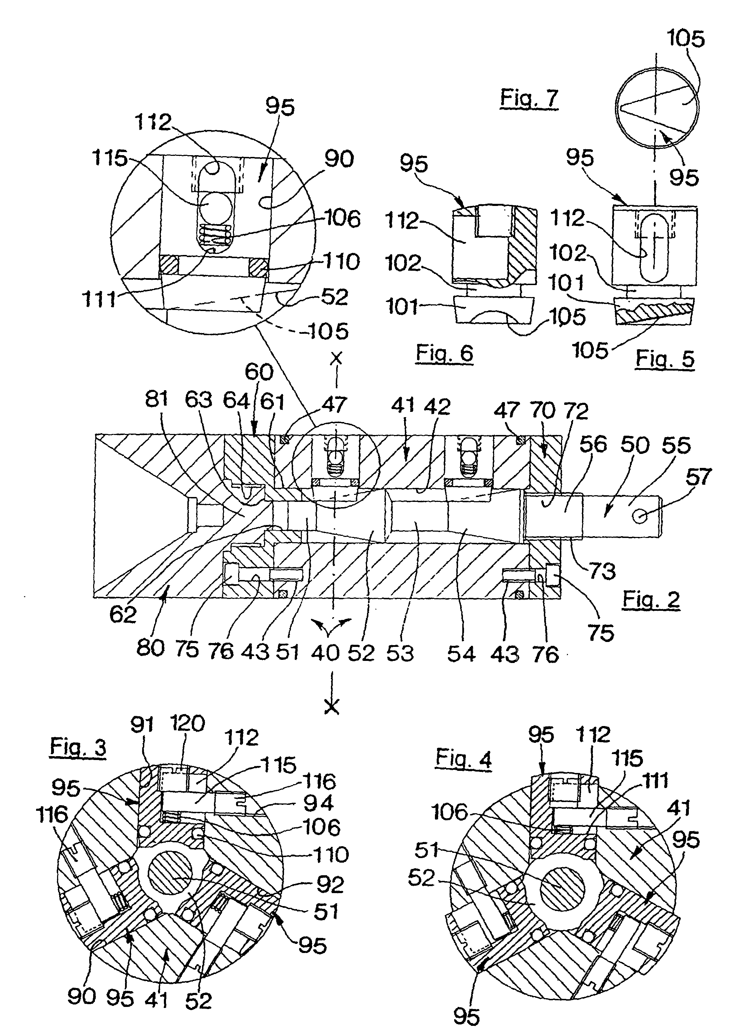

Centrally on the body 41 (Figures 3 and 4) is a pair of triads 90-92 of radial cylindrical housings with coplanar geometrical axes for small pistons 95 that lock the device 40 inside the tube 20.

Centre distance between the geometrical planes of symmetry of said housings 90-92 substantially corresponds to that between the truncated-cone shaped bodies 52, 54 on the control rod 50.

The geometrical planes of symmetry of the housings 90-92 for the small pistons 95, lie perpendicular to the longitudinal axis of the body 41 of the device 40.

In one of the walls of said housings 90-92 partially threaded holes 94 are made, perpendicular to the axis of said pistons 95, to receive the transversal pins 115 with threaded ends 116.

In the position as shown in Figure 2, the rod 50 is screwed in at the end of its rearward stroke and therefore the pistons' 95 inside said housings 90-92 lie at the smaller diameters of the truncated-cone shaped bodies 52 and 54 of said control rod 50.

The body of each piston 95 (Figures 2, 5-7) is substantially cylindrical with a truncated-cone shaped head 101 and a neck 102 made to receive packing.

The face of the forward head 101 presents a recess 105 that can match with the surface of the truncated-cone shaped bodies 52, 54.

Said pistons 95 are pressed towards the rod 50 by compression springs 106, housed in an axial cylindrical hole 121 open outward and threaded at the end, that make contact, at one end, with the bottom 111 of the longitudinal slot 112 made on said pistons and, at the other end, with the transversal pin 115 that screws into the threaded cylindrical housing 94.

The threaded hole 121 is closed by the threaded dowel 120.

Figures 3 and 4 show a cross section made at one of the two triads of pistons indicated by the XX axis in Figure 2.

Figure 3 shows the pistons withdrawn inside the cylindrical body 41 as the internal forward face 105 matches with that part of the truncated-cone shaped bodies 52 and 54 where the diameter is smaller.

In the set-up as described, the device 40 can be freely inserted in the tube 20 and so placed that its forward guide head 80 matches with the free end 32 of the bar 30 to be machined.

Having stabilized this position according to the length of said bar's rear end, using the key 125 the control rod 50 is rotated and then, by means of its thread 56, is axially moved so that little by little the parts of the truncated-cone shaped bodies 52 and 54 of smaller diameter are replaced by those of increasingly larger diameter.

It follows that while the rod 50 is being screwed in, or when fully screwed, using the key 125, the pistons 95 project from the cylindrical surface of the body 41, as seen in Figure 4, this being the position which the device 40 is locked inside the tube 20.

Figure 4 also shows the spring 106 contracted between the transversal screw 115 and the base 111 of the piston slot 112.

Figure 10 illustrates the already described stage of screwing up the control rod 50 using the key 125, and the start of expansion of the pistons 95 until pressure is created (Fig. 11) against the internal surface of the tube to stabilize the device 40 inside said tube 20 as explained above.

In the forward guide head 80 of the device 40, an outward-opening truncated-cone shaped cavity 82 is so formed at the bottom as to receive and guide the bar 30, while rotating for execution of the machining process, as seen in Figure 11.

The position of the bar thus remains perfectly axial with no tendency to become loose, this position being constantly maintained and ensuring a precise machining process.

Figures 12-14 show various internal configurations of the guide head 80, each to suit the shape of the bar being machined.

In Figure 12 the base section 87 of the head 84 is square for a square sectiion bar.

In Figure 13 the base 111 of the head 85 is cylindrico-semispherical for a bar with a semi-spherical head at one end.

In Figure 14 the head 86 is substantially discoid with a cylindrical projection 98, tapering 99 at its end, suitable for penetrating inside a cylindrial bar on the lathe.

The key 125 (Figure 9) presents a handgrip 126 with shank 127 and threaded tip 128 onto which the hollow end of the cylindrical stem 129 is screwed.

Inside said stem is a cavity 130 connected by a channel 131 to the hollow head 132 at the end.

Inside the channel 131 is a piston 140 with annular ribbing 141 above which is an extension 142.

Between said ribbing 141 and the bottom of the internal cavity 130 is a compression spring 145.

In the head 132 are opposite-facing U-shaped recesses 146 at the edge of which is a groove 147.

When the key 125 is screwing up or unscrewing the rod 50, during application or removal of the device 40 to or from the tube, the end of said rod causes withdrawal of the piston 140 and therefore penetration of the ends 57 of a transversal pin, present at either end 55 of the rod 50, in the above-mentioned recesses 146, thus holding the key firm during screwing up or unscrewing.

On completion of this action on the device 40, the spring 145 pushes the key 125 outward to prevent its being accidently left in the tube.

## Claims

1. Rear guiding device (40) for bars (30) to be machined in lathes (10), said device having cylindrical structure (41) for insertion inside a tube (20) on the drive head (12) of the lathes (10) and comprising a forward means (80, 84-86) for self-centering the bar (30) being machined and groups of coplanar radially-sliding pistons (95), subjected to the centripetal action of compression springs (106), and an axial manoeuvering rod (50) with truncated-cone shaped extensions (52) (54) placed at the position of said groups of pistons (95) to determine, by axial translation, the centrifugal movement of the pistons (95) for locking the cylindrical structure (41) with the tube (20),
**characterized in that** said cylindrical structure (41) has an external diameter corresponding to the internal diameter of tubes (20) normally used in the drive heads of lathes (10) and **in that** there are two groups of pistons (95) respectively placed substantially at the ends of the cylindrical structure (41)

2. Device as in claim 1,
**characterized in that** the truncated-cone shaped extensions (52) and (54) of the manoeuvering rod (50) face in the same direction to obtain, due to said axial translation, centrifugal movement of the pistons (95) to lock the cylindrical structure (41) with the tube (20).

3. Device (40) as in claim 1
**characterized in that** the control rod (50) has threading (56) at its external end that screws onto a rear flange (70) on the cylindrical structure (41) facing towards the free end of the tube (20) and a cylindrical tip (55) for application of a manual means (125) of control by the user so that axial movement of said rod (50) is produced by causing said manual means (125) of control to rotate said control rod (50) in one direction or in the other.

4. Device (40) as in claim 3
**characterized in that** the manual (125) means of control is substantially a key (125) consisting of a tubular body (127) at one end of which is a suitable handgrip (126) to remain outside the tube (20) and-at the other end of which is a threaded tubular appendix (128) that screws onto a threaded housing in a tubular body (129) thus creating a cylindrical chamber (130) in which is a compression spring (145) that presses between the bottom of said chamber and a ring (141) that surrounds a small piston (140) free to move inside a channel (131) that connects said chamber (130) to a cylindrical cavity (132) open towards the free end of said tubular body (129) and of a diameter corresponding to the end (55) of the control rod (50) emerging from the cylindrical structure (41), there being formed in the walls of said cavity (132) two longitudinal opposing recesses (146) into which the two ends of a pin (57), applied transversally to said end (55) of the control rod (50), can penetrate after having moved the piston (140) inwards overcoming pressure from the compression spring (145), it being thus possible on rotating the key (125) by means of its handgrip (126), to have the ends of said pin (57) penetrate inside the two longitudinal opposing recesses (146) and then inside the niches (147) made in one of their edges, the compression spring (145) ensuring stability of the key (125) on the control rod (50) during the rotation needed to lock the cylindrical structure (40) inside the tube (20) when a fresh machining stage starts or to release said structure when machining is finished.

5. Device (40) as in claim 1,
**characterized in that** the
forward head (80, 84-86) on the cylindrical structure (41) presents the central part shaped to correspond substantially with the rear end (32) of said bar (30), associated to a tapered selfcentering expansion (82) so that, following thrust, in a relative sense, from the rear end of said bar (30) against said head (80), the tapered expansion (82) selfcentres the free end (32) of the bar (30) being machined, towards the shaped central part where said end finds a stable position.

6. Device (40) as in claim 5,
**characterized in that** the cylindrical structure (41) consists of a cylindrical body with an axial cylindrical hole (42) to receive the control rod (50), of a rear flange with central threading (73) to screw onto the threaded area (56) of the end (55) of the control rod (50), of a forward flange (60) with cylindrical expansion (61) on the inner lace, its diameter corresponding to that of the axial cylindrical hole (42) in the structure (41) with an internal cylindrical hole (62),its diameter corresponding to the front tip (51) of the control rod (50) and with a cylindrical threaded cavity (64) open on the external face to screw onto a threaded expansion (81) of the self-centering head (80, 84-86) of the bar (30) being machined.

7. Device (40) as in claim 5,
**characterized in that** the forward cylindrical self-centering head (80) presents a cylindrical bottom of a diameter corresponding to that of the round bar (30) being machined and a hollow tapered external expansion (82) the greater base of which faces outwards.

8. Device (40) as in claim 5,
**characterized in that** the forward cylindrical self-centering head (84) presents a bottom (87) of a square section dimensions of which correspond to those of a square bar being machined, and a hollow tapered external expansion whose greater base faces outwards.

9. Device (40) as in claim 5,
**characterized in that** the forward cylindrical self-centering head (85) presents a bottom (111) of a semi-spherical section whose form and dimensions correspond to those of the round bar being machined and a hollow tapered external expansion whose greater base faces outwards.

10. Device (40) as in claim 5,
**characterized in that** the forward cylindrical self-centering head (86) presents an axial cylindrical body (98) and a tapered tip (99) with an outward-facing lesser base, the diameter of the cylindrical body corresponding to the internal diameter of a tubular bar being machined.

## Patentansprüche

1. Hintere Führungsvorrichtung (40) für die zu bearbeitenden Stäbe (30) auf Drehmaschinen (10), bei denen genannte Vorrichtung einen zylindrischen Aufbau (41) hat, der in das Innere des Rohrstückes (20) des Antriebskopfes (12) der Drehmaschinen (10) eingesetzt werden kann und einen vorderen Selbstzentrierkopf (80, 84-86) für den sich in Arbeit befindlichen Stab (30) und Gruppen kleiner komplanarer und radial gleitender Kolben (95) umfaßt, die der zentripetalen Wirkung von gegenwirkenden Federn (106) unterliegen, sowie eine axiale Steuerstange (50) mit konisch-stumpfartigen Aufweitungen (52 und 54), die übereinstimmend mit diesen Gruppen kleiner Kolben (95) angeordnet sind, um durch axiales Versetzen die zentrifugale Verschiebung der kleinen Kolben (95) zur Verriegelung des zylindrischen Aufbaus (41) mit dem Rohrstück (20) zu bestimmen,
**dadurch gekennzeichnet, daß** genannter zylindrische Aufbau (41) einen Außendurchmesser hat, der dem Innendurchmesser der Rohre (20) entspricht, die normalerweise in den Antriebsköpfen der Drehmaschinen (10) verwendet werden und daß die Gruppen kleiner Kolben (95) zwei an der Zahl sind und sich fast an den äußeren Enden des zylindrischen Aufbaus (41) befinden.

2. Vorrichtung wie unter Anspruch 1),
**dadurch gekennzeichnet, daß** die konisch-stumpfartigen Aufweitungen (52 und 54) der Steuerstange (50) in die gleiche Richtung zeigen, um direkt und durch die Wirkung ihres axialen Versetzens die zentrifugale Verschiebung der kleinen Kolben (95) durch Verriegeln des zylindrischen Aufbaus (41) mit dem Rohrstück (20) zu erhalten.

3. Vorrichtung (40) wie unter Anspruch 1),
**dadurch gekennzeichnet, daß** die Steuerstange (50) an ihrem äußeren Ende ein Gewinde (56) aufweist, das sich an einem hinteren Flansch (70) des zylindrischen Aufbaus (41), der zum freien Ende des Rohrstücks (20) zeigt, anschraubt, sowie eine zylindrische Spitze (55) zur Anbringung eines manuellen Steuermittels (125) seitens des Benutzers, welches das axiale Gleiten dieser Steuerstange (50) bestimmt, indem mittels genanntem manuellem Steuermittel (125) diese Steuerstange (50) in die eine oder die andere Richtung gedreht wird.

4. Vorrichtung (40) wie unter Anspruch 3)
**dadurch gekennzeichnet, daß** das manuelle Steuermittel (125) im wesentlichen ein Schlüssel ist, der aus einem rohrförmigen Körper besteht (127), der an einem Ende mit einem geeigneten Griffstück (126) versehen ist und dazu bestimmt ist, außen am Rohrstück (20) zu bleiben und am anderen Ende eines rohrförmigen Gewindeansatzes (128), der sich an einem Gewindesitz eines rohrförmigen Körpers (129) anschraubt, wobei er eine zylindrische Kammer (130) schafft, in der eine gegenwirkende Feder (145) vorgesehen ist, die zwischen dem Boden dieser Kammer und einem Ring (141) tätig ist, der einen Kolben (140) umschließt, welcher frei ist, um sich im Innern eines Kanälchens (131) zu verschieben, das diese Kammer (130) mit einem zylindrischen Hohlraum (132) verbindet, der zum freien Ende des genannten rohrförmigen Körpers (129) hin geöffnet ist und einen Durchmesser hat, der mit dem äußeren Ende (55) der Steuerstange (50), die aus dem zylindrischen Aufbau (41) austritt, übereinstimmt, wobei an den Wänden dieses Hohlraumes (132) zwei entgegengesetzte Längsbuchtungen (146) vorgesehen sind, in die die beiden äußeren Enden eines Stiftes (57) eintreten können, der an genanntem äußerem Ende (55) der Klemmstange (50) quer angebracht ist, nachdem er die Verschiebung zum Inneren des kleinen Kolbens (140) hin bestimmt hat, wobei er auf die gegenwirkende Feder (145) drückt, was es ermöglicht, durch Drehen des Schlüssels (125) mittels Griffstück (126) die äußeren Enden des genannten Stiftes (57) in das Innere der beiden entgegengesetzten Längsbuchtungen (146) eindringen zu lassen und demzufolge ins Innere von Nischen (147), die an einem ihrer Ränder vorgesehen sind, wobei der gegenwirkenden Feder (145) die Stabilität des Schlüssels (125) an der Klemmstange (50) während der Drehung gewährleistet wird, die erforderlich ist, um den zylindrischen Aufbau (40) im Innern des Rohrstückes (20) zu Beginn einer neuen Bearbeitung zu verriegeln oder den Aufbau selbst am Ende der Bearbeitung zu lösen.

5. Vorrichtung (40) wie unter Anspruch 1),
**dadurch gekennzeichnet, daß** der Kopf (80-84-86) vor dem zylindrischen Aufbau (41) den mittleren geformten Teil so aufweist, daß er im wesentlichen mit dem hinteren Ende (32) des sich in Arbeit befindlichen Stabes (30) übereinstimmt, in Verbindung mit einer konischen Aufweitung (82) zur Selbstzentrierung, daher wird infolge des Schubes in Richtung des hinteren Endes des sich in Arbeit befindlichen Stabes (30) gegen diesen Kopf (80) die konische Aufweitung (82) die Selbstzentrierung des freien Endes (32) des sich in Arbeit befindlichen Stabes (30) vornehmen und zwar zum mittleren geformten Abschnitt hin, wo dieses Ende eine stabile Positionierung findet.

6. Vorrichtung (40) wie unter Anspruch 5),
**dadurch gekennzeichnet, daß** der zylindrische Aufbau (41) eine axiale zylindrische Öffnung (42) zum Einsetzen der Klemmstange (50) aufweist, **gekennzeichnet durch** einen mittleren hinteren Gewindeflansch (73) zum Anschrauben des Gewindeabschnittes (56) des äußeren Endes (55) der Steuerstange (50), einen vorderen Flansch (60) mit zylindrischer Aufweitung (61) an der Innenseite, mit einem Durchmesser, der jenem der axialen zylindrischen Öffnung (42) des zylindrischen Aufbaus (41) entspricht, mit innenliegender zylindrischer Öffnung (62) mit einem Durchmesser, der der vorderen Spitze (51) der Steuerstange (50) entspricht und mit zylindrischem Gewindehohlraum (64), der an der Außenseite geöffnet ist zum Anschrauben einer mit Gewinde versehenen Aufweitung (81) des Selbstzentrierkopfes (80, 84-86) der sich in Arbeit befindlichen Stäbe (30).

7. Vorrichtung (40) wie unter Anspruch 5),
**dadurch gekennzeichnet, daß** der vordere zylindrische Kopf (80) zur Selbstzentrierung einen zylindrischen Boden mit einem Durchmesser aufweist, der jenem des runden und sich in Arbeit befindlichen Stabes (30) entspricht, und eine äußere konische und hohle Aufweitung (82) mit einer größeren Basis nach außen hin.

8. Vorrichtung (40) wie unter Anspruch 5),
**dadurch gekennzeichnet, daß** der vordere zylindrische Kopf (84) zur Selbstzentrierung einen Boden (87) mit quadratischem Schnitt und Abmessungen aufweist, die einem sich in Arbeit befindlichen quadratischen Stab entsprechen, sowie eine äußere konische und hohle Aufweitung mit größerer Basis nach außen hin.

9. Vorrichtung (40) wie unter Anspruch 5),
**dadurch gekennzeichnet, daß** der vordere zylindrische Kopf (85) zur Selbstzentrierung einen Boden (111) mit halbrundem Schnitt mit Formen und Abmessungen aufweist, der dem des runden und sich in Arbeit befindlichen Stabes entspricht, sowie eine äußere konische und hohle Aufweitung mit einer größeren Basis nach außen hin.

10. Vorrichtung (40) wie unter Anspruch 5),
**dadurch gekennzeichnet, daß** der vordere zylindrische Kopf (86) zur Selbstzentrierung einen axialen zylindrischen Körper (98) und eine Spitze (99) mit der Form des Stumpfes eines Kegels aufweist, dessen Basis nach außen hin kleiner ist, wobei der Durchmesser des zylindrischen Körpers dem Innendurchmesser eines sich in Arbeit befindlichen rohrförmigen Stabes entspricht.

## Revendications

1. Dispositif 40 de guidage arrière des barres 30 à usiner sur les tours 10, ledit dispositif ayant une structure cylindrique 41 pouvant être introduite dans un élément tubulaire 20 de la tête motrice 12 des tours 10 et comprenant une tête avant 80, 84-86 de centrage automatique de la barre 30 à usiner et des groupes de petits pistons 95 coplanaires coulissant radialement, soumis à l'action centripète de ressorts antagonistes 106 et une tige axiale de manoeuvre 50 ayant des expansions tronconiques 52 et 54 disposées au niveau desdits groupes de petits pistons 95 pour déterminer, en se mouvant par translation axiale, le déplacement centrifuge des pistons 95 en vue de bloquer la structure cylindrique 41 à l'élément tubulaire 20, **caractérisé en ce que** ladite structure cylindrique (41) a un diamètre externe correspondant au diamètre interne de tubes (20) utilisés normalement dans les têtes motrices des tours (10) et **en ce que** les groupes de petits pistons 95 sont deux et sont disposés respectivement presque aux extrémités de la structure cylindrique 41.

2. Dispositif comme dans la revendication 1), **caractérisé en ce que** les expansions tronconiques 52 et 54 de la tige de manoeuvre 50 sont orientées dans la même direction pour obtenir directement, par effet de sa translation axiale, le déplacement centrifuge des pistons 95 en vue de bloquer la structure cylindrique 41 à l'élément tubulaire 20.

3. Dispositif (40) comme dans la revendication 1), **caractérisé en ce que** la tige de manoeuvre (50) présente, à son extrémité externe, un filetage (56) qui se visse sur une bride arrière (70) de la structure cylindrique (41) orientée vers la partie libre de l'élément tubulaire (20), et une pointe cylindrique (55) pour l'application d'un moyen (125) manuel de manoeuvre de la part de l'opérateur, d'où le cheminement axial de ladite tige de manoeuvre (50) est déterminé en faisant tourner, à l'aide dudit moyen manuel de manoeuvre (125), ladite tige de manoeuvre (50), dans un sens et dans l'autre.

4. Dispositif (40) comme dans la revendication 3), **caractérisé en ce que** le moyen manuel de manoeuvre (125) est en substance une clé, constituée par un corps tubulaire (127) muni à une extrémité d'un manche adéquat (126) destiné à rester à l'extérieur de l'élément tubulaire (20), et à l'autre extrémité d'une appendice tubulaire filetée (128) qui se visse sur un logement fileté d'un corps tubulaire (129), en donnant lieu à une chambre cylindrique (130) dans laquelle est prévu un ressort antagoniste (145) qui agit entre le fond de ladite chambre et une bague (141) entourant un petit piston (140), libre de se déplacer à l'intérieur d'un canal (131) qui raccorde ladite chambre (130) à une cavité cylindrique (132), ouverte vers l'extrémité libre dudit corps tubulaire (129) et ayant un diamètre correspondant à l'extrémité (55) de la tige de manoeuvre (50) sortant de la structure cylindrique (41), deux échancrures longitudinales opposées (146) étant prévues sur les parois de ladite cavité (132), dans lesquelles peuvent pénétrer les deux extrémités d'un goujon (57) appliqué transversalement à ladite extrémité (55) de la tige de serrage (50) après avoir déterminé le déplacement vers l'intérieur du piston (140) par le forçage du ressort antagoniste (145), en permettant ainsi, en faisant tourner la clé (125) à l'aide du manche (126), la pénétration des extrémités dudit goujon (57) à l'intérieur des deux échancrures longitudinales opposées (146) et ensuite à l'intérieur de niches (147) prévues sur un de leurs bords, le ressort antagoniste (145) assurant la stabilité de la clé (125) sur la tige de serrage (50) pendant la rotation nécessaire à bloquer la structure cylindrique (40) à l'intérieur de l'élément tubulaire (20) au début d'un nouvel usinage ou à débloquer la structure à la fin de l'usinage.

5. Dispositif (40) comme dans la revendication 1), **caractérisé en ce que** la tête avant (80- 84-86) de la structure cylindrique (41) présente la partie centrale façonnée de manière à correspondre en substance à l'extrémité arrière (32) de la barre (30) à usiner, associée à une expansion conique (82) à centrage automatique en permettant ainsi à l'expansion conique (82), après une poussée en sens relatif de l'extrémité arrière de la barre (30) à usiner, contre ladite tête (80), de centrer automatiquement l'extrémité libre (32) de la barre (30) à usiner, vers la partie centrale façonnée où l'extrémité susdite trouve un emplacement stable.

6. Dispositif (40) comme dans la revendication 5), **caractérisé en ce que** la structure cylindrique (41) présente un orifice axial cylindrique (42) pour le logement de la tige de serrage (50), par une bride arrière à filetage central (73) pour le vissage de la zone filetée (56) de l'extrémité (55) de la tige de manoeuvre (50), par une bride avant (60) à expansion cylindrique (61) sur la face interne, ayant un diamètre correspondant à celui de l'orifice cylindrique axial (42) de la structure cylindrique (41), dont l'orifice interne cylindrique (62) a un diamètre correspondant à la pointe avant (51) de la tige de manoeuvre (50), et la cavité cylindrique filetée (64) est ouverte sur la face externe pour le vissage d'une expansion filetée (81) de la tête de centrage automatique (80, 84-86) des barres (30) à usiner.

7. Dispositif (40) comme dans la revendication 5), **caractérisé en ce que** la tête avant cylindrique (80) de centrage automatique présente un fond cylindrique dont le diamètre correspond à celui de la barre ronde (30) à usiner et une expansion externe conique creuse (82) ayant la base plus grande vers l'extérieur.

8. Dispositif (40) comme dans la revendication 5), **caractérisé en ce que** la tête avant cylindrique (84) de centrage automatique présente un fond (87) ayant une section carrée, dont les dimensions correspondent à une barre carrée à usiner et une expansion externe conique creuse, ayant la base plus grande vers l'extérieur.

9. Dispositif (40) comme dans la revendication 5), **caractérisé en ce que** la tête avant cylindrique (85) de centrage automatique présente un fond (111) ayant une section hémisphérique, dont les formes et les dimensions correspondent à celles de la barre ronde à usiner et une expansion externe conique creuse ayant la base plus grande vers l'extérieur.

10. Dispositif (40) comme dans la revendication 5), **caractérisé en ce que** la tête avant cylindrique (86) de centrage automatique présente un corps cylindrique axial (98) et une pointe (99) en forme de tronc de cône, dont la base plus petite est externe, le diamètre du corps cylindrique correspondant à celui interne d'une barre tubulaire soumise à usinage.
